(19) Europäisches Patentamt
European Patent Office
Office européen des brevets

(11) Veröffentlichungsnummer: **0 243 514**
**A1**

(12) # EUROPÄISCHE PATENTANMELDUNG

(21) Anmeldenummer: **86105790.9**

(22) Anmeldetag: **26.04.86**

(51) Int. Cl.[4]: **C08G 77/38**, C08L 57/00, C08L 101/00, //(C08L57/00,83:04),(C08L101/0-0,83:04)

Ein Antrag gemäss Regel 88 EPÜ auf Berichtigung der Beschreibung liegt vor. Über diesen Antrag wird im Laufe des Verfahrens von der Prüfungsabteilung eine Entscheidung getroffen werden (Richtlinien für die Prüfung im EPA, A-V, 2.2).

(43) Veröffentlichungstag der Anmeldung: **04.11.87 Patentblatt 87/45**

(84) Benannte Vertragsstaaten: **BE FR GB IT LU NL SE**

(71) Anmelder: **Schill & Seilacher GmbH & Co.**
**Moorfleeterstrasse 28**
**D-2000 Hamburg 74(DE)**

(72) Erfinder: **Pyrlik, Manfred, Dr.**
**Waldweg 7**
**D-2531 Elstorf(DE)**
Erfinder: **Schwentner, Jens, Dr.**
**Finkenau 32**
**D-2000 Hamburg 76(DE)**
Erfinder: **Remmers, Günter**
**Eichtalstrasse 40**
**D-2000 Hamburg 70(DE)**
Erfinder: **Krámbeer, Michael**
**Seebarg 1**
**D-2000 Hamburg 65(DE)**
Erfinder: **Kirchhoff, Hans**
**Christel-Schmidt-Allee 12**
**D-2070 Ahrensburg(DE)**

(74) Vertreter: **Schulmeyer, Karl-Heinz, Dr.**
**Kieler Strasse 59a**
**D-2087 Hasloh(DE)**

(54) **Verfahren zur Herstellung von Kautschuk-oder Thermoplastmischungen unter Verwendung von Verarbeitungshilfsmitteln oder Modifiziermitteln auf der Basis von Organo-Silikon-Copolymeren.**

(57) Die Erfindung betrifft ein Verfahren zur Herstellung von Kautschuk-oder Thermoplastmischungen unter Verwendung von Organo-Silikon-Copolymeren mit einem mittleren Molekulargewicht von etwa 500 bis 100 000 aus Polyorganosiloxanen mit einer Anzahl end-und/oder seitenständiger reaktiver Substituenten und mit einem mittleren Molekulargewicht von etwa 300 bis 75.000 und kohlenstofforganischen Verbindungen, die aus einem gesättigten oder ungesättigten, gerad-oder verzweigtkettigen, mindestens 4 C-Atome enthaltenden kohlenwasserstoffhaltigen Teil und ein oder mehreren reaktionsfähigen Gruppen oder Zentren bestehen, über die die kohlenstofforganischen Verbindungen mit den Polyorganosiloxanen verknüpft sind, als Verarbeitungshilfsmittel oder Modifiziermittel. Der kohlenstofforganische bzw. siliciumorganische Anteil im Organo-Silokon-Copolymeren beträgt mindestens 5 Gew.%.

EP 0 243 514 A1

# Verfahren zur Herstellung von Kautschuk-oder Thermoplastmischungen unter Verwendung von Verarbeitungshilfsmitteln oder Modifiziermitteln auf der Basis von Organo-Silikon-Copolymeren

Vorliegende Erfindung betrifft ein Verfahren zur Herstellung von Kautschuk-oder Thermoplastmischungen unter Verwendung von Verarbeitungshilfsmitteln oder Modifiziermitteln auf der Basis von Organo-Silikon-Copolymeren.

Es ist bekannt, daß die Verarbeitbarkeit und die Eigenschaften der verschiedensten Kautschukmischungen in der Regel vor oder während der Verarbeitung durch den Zusatz bestimmter Verarbeitungshilfsmittel oder Modifiziermittel verbessert werden können. Bei diesen bekannten Additiven handelt es sich um Hilfsstoffe, die u.a. die Verarbeitungsgeschwindigkeit durch Reduzierung der Viskosität, durch verbesserte Verteilung einzelner Mischungsbestandteile oder durch Verringerung des Haftungsvermögens an Metalloberflächen erhöhen sollen. Derartige Verarbeitungshilfsmittel gehören den verschiedensten Stoffgruppen an. Bei spiele hierfür sind Fettsäuresalze, Fettsäureester, Wachse, Harze, Ethylenoxid-und Propylenoxid-Polymerisate u.dgl.

Aus der DE-OS 29 33 247 ist eine Kautschukmischung mit einem Gehalt an Organopolysiloxan bekannt, das jedoch kein Copolymeres aus einem Polysiloxan und einer kohlenstofforganischen Komponente, sondern ein reines Polydiorganosiloxan ist, das zusammen mit einem Kieselsäurefüllstoff und einem Vernetzungsmittel in das Kautschukpolymere eingemischt wird und dabei als Aktivator für den Füllstoff dienen soll. Über die Anwendung von Kautschukverarbeitungshilfsmitteln der erfindungsgemäßen Art ist dieser Offenlegungsschrift nichts zu entnehmen.

Ferner ist aus der DE-OS 25 21 937 ein Antistrukturmittel bekannt, worunter ein Hilfsmittel zur Verbesserung der Füllstoffverteilung zu verstehen ist, das aus Gemischen kurzkettiger $\alpha,\omega$-Siloxandiole und kurzkettiger $\alpha$-Alkoxy-$\omega$-Siloxanolen besteht. Als wesentliche Bestandteile werden Hexamethyltrisiloxan-1,5-diol und 1-Methoxy-hexamethyltrisiloxan-5-ol angegeben. Diese Antistrukturmittel sind für die Verwendung speziell in Silikonkautschuk vorgesehen.

In der DE-OS 28 51 431 werden Füllstoffzusammensetzungen beschrieben, die als Füllstoffaktivatoren Organosiliciumverbindungen enthalten und die in vulkanisierbare Kautschukzusammensetzungen einverleibt werden können. Die dort beschriebenen Organosiliciumverbindungen bestehen aus ein oder mehreren einzelnen Silylgruppen, die mit kohlenstofforganischen Verbindungen, vorzugsweise Polymeren, verbunden sind. In diesen Verbindungen liegen demnach keine Polysiloxanketten vor. Ähnliche Organosiliciumverbindungen werden auch in der DE-OS 26 35 601 für praktisch den gleichen Verwendungszweck beschrieben.

Schließlich ist aus der DE-OS 19 15 789 bekannt, daß die Oberflächeneigenschaften von organischen Polymeren durch Einarbeiten von bestimmten Blockmischpolymeren mit Organosiloxanblöcken und kohlenstofforganischen Polymerenblöcken, die sich von ein oder mehreren Vinylmonomeren, Polydienmonomeren u.dgl. ableiten lassen, modifiziert werden können. Diese Blockmischpolymeren sollen in Kautschuke eingearbeitet werden und dabei die atmosphärischen Alterungseigenschaften der Kautschuke verbessern. Ein Fachmann entnimmt der DE-OS 19 15 789 die Lehre, daß der erwünschte Zweck einer Verbesserung der Oberflächeneigenschaften der Kautschuke nur mit Hilfe von Blockmischpolymeren der dort beschriebenen Art erreicht werden kann. Es wird in dieser Vorveröffentlichung betont, daß die Verarbeitungshilfsmittel für den gewünschten Zweck Blockcopolymere aus wenigstens einem Organosiloxanblock und wenigstens einem kohlenstofforganischen Block sein müssen. Da bei der Herstellung von solchen Blockcopolymeren von gleichbleibender Qualität in der Regel ein größerer Aufwand erforderlich ist als bei der Herstellung von einfachen Copolymeren, muß der Fachmann bei unbefangenem Studium dieser Druckschrift den Eindruck gewinnen, daß nur mit den dort beschriebenen Blockcopolymeren die gewünschte Wirkung als Verarbeitungshilfsmittel zur Verbesserung der Oberflächeneigenschaften von organischen Polymeren, insbesondere von Kautschuken, erreicht werden kann.

Die meisten dieser bekannten Hilfsmittel erfüllen ihren Zweck bei Kautschukmischungen mit verhältnismäßig leicht zu beeinflussenden Verarbeitungseigenschaften. Die Grenzen ihrer Wirksamkeit zeigen sich aber bei schwierig zu verarbeitenden Kautschukmischungen. Verarbeitungsschwierigkei ten treten insbesondere bei speziellen Elastomeren, beispielsweise bei Ethylen-Propylen-Copolymeren (z.B. bei EPDM-Rubber), Fluorelastomeren, Nitrilkautschuk, chloriertem und chlorsulfoniertem Polyethylen, Silikonkautschuk u.dgl., sowie bei solchen Elastomeren auf, die besonders feinverteilte Füllstoffe, wie hochaktiven Ruß oder aktive Kieselsäure u.ä., enthalten. Diese Schwierigkeiten lassen sich in der Regel nicht dadurch beheben, daß man die Dosis der herkömmlichen Verarbeitungshilfsmittel wesentlich erhöht. Es wurde nämlich festgestellt, daß eine derartige Erhöhung der Dosis, wenn überhaupt, meist nur eine geringfügige weitere Steigerung der ohnehin unzureichenden Wirkung zur Folge hat. Das Ergebnis solcher

Maßnahmen steht daher in einem krassen Mißverhältnis zum erforderlichen Aufwand und kann weder vom technischen noch vom wirtschaftlichen Standpunkt befriedigen. Ein weiterer Nachteil ist, daß solche erhöhten Zusatzmengen an Verarbeitungshilfsmitteln zu Unverträglichkeitserscheinungen führen können, z.B. zu einem unerwünschten Ausblühen oder Ausschwitzen der Hilfsstoffe auf dem fertigen Produkt.

Als eine weitere Folge solcher erhöhter Zusätze an herkömm lichen Verarbeitungshilfsmitteln in Natur- oder Synthesekautschuken sowie in Thermoplasten werden häufig Verschlechterungen der mechanischen Eigenschaften, wie z.B. der Härte, der Zerreißfestigkeit, des Elastizitätmoduls, des Druckverformungsrestes usw., am fertigen Gummiprodukt beobachtet. Solche Nachteile können kaum toleriert werden, und es besteht daher ein dringender Bedarf an Verarbeitungshilfmitteln, die sich ohne einen größeren Aufwand in einfacher Weise und preiswert herstellen lassen und die auch bei schwierig zu verarbeitenden Kautschuk- und Thermoplastmischungen die gewünschte Wirkung in der erforderlichen Intensität entfalten, ohne daß dabei die vorstehend genannten Nachteile auftreten.

Die vorliegenden Erfindung liegt daher die Aufgabe zugrunde, Verarbeitungshilfsmittel und Modifiziermittel insbesondere für schwierig zu verarbeitende Natur-und Synthesekautschuke sowie Thermoplaste bereitzustellen, wobei diese Verarbeitungshilfsmittel oder Modifiziermittel in der Lage sein sollen, bei Anwendung üblicher normaler Dosierungen die Verarbeitbarkeit und Handhabung solcher Kautschuke und Kautschukmischungen erheblich zu erleichtern, ohne daß die chemischen und physikalischen Eigenschaften der resultierenden Kautschukprodukte in nennenswertem Umfange beeinträchtigt werden.

Diese Aufgabe wird erfindungsgemäß gelöst durch ein Verfahren zur Herstellung von Kautschuk-oder Thermoplastmischungen unter Verwendung von Verarbeitungshilfsmitteln oder Modifiziermitteln auf der Basis von Organo-Silikon-Copolymeren aus Polyorganosiloxanen, die eine Anzahl endständiger und/oder seitenständiger reaktiver Substituenten aufweisen und in denen die Organogruppe eine Methyl-, Ethyl- und/oder Phenylgruppe ist, und kohlenstofforganischen Verbindungen mit ein oder mehreren reaktionsfähigen Gruppen oder Zentren, über die die kohlenstofforganischen Verbindungen mit den Polyorganosiloxanen zu Organo-Silikon-Copolymeren verknüpft sind. Das Verfahren ist dadurch gekennzeichnet, daß die Organo-Silikon-Copolymeren durch chemische Umsetzung von Polyorganosiloxanen, die end-und/oder seitenständige OR-oder $NR_2$-Gruppen, in denen R ein Wasserstoffatom, eine Methyl-oder Ethylgruppe, eine Phenylgruppe oder eine Acylgruppe mit 1 bis 4 C-Atomen im Alkylrest bedeutet und wobei die einzelnen Gruppen R gleich oder verschieden sein können, oder Vinyl-oder Methylolgruppen oder direkt an Silicium gebundenen Wasserstoff aufweisen und ein mittleres Molekulargewicht von 300 bis 75000 haben, mit monomeren kohlenstofforganischen Verbindungen, deren kohlenwasserstoffhaltiger Teil gesättigt oder unge sättigt und gerad-oder verzweigtkettig ist und mindestens 4 C-Atome enthält und die als reaktive Gruppen oder Zentren ein oder mehrere C=C-Doppelbindungen oder C≡C-Dreifachbindungen und/oder ein oder mehrere Epoxid-, Hydroxyl-, Carboxyl-, Amino-und/oder Isocyanatgruppen aufweisen, erhalten werden, wobei der kohlenstofforganische bzw. siliciumorganische Anteil im Organo-Silikon-Copolymeren mindestens 5 Gew.% beträgt und das mittlere Molekulargewicht der erhaltenen Copolymeren im Bereich von 500 bis 100 000 liegt.

Die Schwierigkeiten bei der Verwendung von Polydiorganosiloxanen in Gummimischungen haben ihren Grund in der dem Fachmann geläufigen Tatsache, daß die üblichen Silikone mit allen gebräuchlichen Elastomeren, abgesehen vom Silikonkautschuk, außerordentlich wenig verträglich sind, so daß es schon beim Vermischen geringer Mengen an Silikonen in z.B. Kautschukmischungen zu unerwünschten Unverträglichkeitserscheinungen kommt.

Es wurde überraschend gefunden, daß die erfindungsgemäß eingesetzten Copolymeren auf der Basis von Polyorganosiloxanen und monomeren kohlenstofforganischen Verbindungen eine ausgezeichnete Verträglichkeit mit allen gängigen Kautschuktypen aufweisen und sich als hervorragende Verarbeitungshilfsmittel und Modifiziermittel auch bei schwierig zu verarbeitenden Kautschuk-und Thermoplastmischungen in normaler Dosierung eignen.

Die erfindungsgemäß eingesetzten Organo-Silikon-Copolymeren können in an sich bekannter Weise durch chemische Umsetzungen geeigneter siliciumorganischer Verbindungen mit bestimmten reaktionsfähigen kohlenstofforganischen Verbindungen hergestellt werden. Hierbei empfiehlt es sich, zunächst das Polyorganosiloxan und die kohlenstofforganische Verbindung, die damit copolymerisiert werden soll, in getrennten Reaktionen herzustellen und dann in einem weiteren Reaktionsschritt die gewünschte Verknüpfung an den reaktionsfähigen Gruppen oder Zentren, die beide Komponenten an geeigneten Stellen aufweisen, zum Organo-Silikon-Copolymeren vorzunehmen.

Die Art der Verknüpfungsreaktion hat, wenn überhaupt, nur einen geringen Einfluß auf die Eigenschaften und damit auf die Eignung der erhaltenen Copolymeren als Verarbeitungshilfsmittel und/oder Modifiziermittel für Kautschuk-und Thermoplastmischungen. Die Verknüpfungen zwischen dem Polysiloxan und der monomeren kohlenstofforganischen Komponente müssen nur in ausreichendem Maße an den

geeigneten Stellen zwischen den funktionellen Gruppen beider Komponenten eintreten, so daß ein Copolymeres mit den erforderlichen und gewünschten Eigenschaften erhalten werden kann. Daher sind alle Arten von Verknüpfungsreaktionen, die dieses Erfordernis erfüllen, für den erfindungsgemäßen Zweck geeignet. Beispielsweise können die folgenden Verknüpfungsreaktionen zur Herstellung von für den erfindungsgemäßen Zweck geeigneten Copolymeren angewandt werden.

a) Kondensationsreaktionen:

Als Ausgangsprodukte können silan-oder silanolgruppenhaltige Siloxanole oder Polysiloxanole als eine Komponente und hydroxyl-, amino-oder estergruppenhaltige monomere kohlenstofforganische Verbindungen als zweite Komponente eingesetzt werden. Um die Neigung der Siloxanole zur Eigenkondensation zurückzudrängen, werden in an sich bekannter Weise bestimmte Katalysatoren, beispielsweise dehydratisierend wirkende Katalysatoren, z.B. Schwefelsäure oder Phosphorsäure, ferner HCl oder organische Säurehalogenide, insbesondere Acetylchlorid, oder basische Katalysatoren, wie Triethylamin, eingesetzt und die Reaktionsbedingungen so eingestellt und geführt, daß die Eigenkondensation weitgehend unterdrückt wird.

So können zwischen der Siloxanol-Komponente und der monomeren kohlenstofforganischen Komponente, die die Gruppierungen $-\overset{|}{\underset{|}{C}}-OR$ und/oder $-\overset{|}{\underset{|}{C}}-NR_2$ aufweisen, wobei R = Wasserstoff, Alkyl-oder Acylgruppen bedeuten, Kondensationsreaktionen, wie z.B. Veretherungen, Veresterungen, Umesterungen, Aminierungen usw., durchgeführt werden, die beispielsweise zur Bildung von Copolymeren mit Ester-, Ether-und Amidverknüpfungen führen.

b) Additionsreaktionen:

Als Ausgangsprodukte können silangruppenhaltige Polysiloxane als eine Komponente und monomere kohlenstofforganische Verbindungen mit ungesättigten Gruppierungen, wie $>C=C<$ , $>C=N-$, $N\equiv C-$, $O=C=N$-oder $-C\equiv C-$, als zweite Komponente eingesetzt werden, wobei sich beide Komponenten unter geeigneten Reaktionsbedingungen in bekannter Weise umsetzen, indem sich die ungesättigten Gruppierungen der kohlenstofforganischen Verbindung an die Silangruppen des Polysiloxans unter Bildung von entsprechenden Copolymeren addieren. Diese Reaktionen werden z.B. mit Platinchlorwasserstoffsäure katalysiert.

c) Substitutionsreaktionen:

Als Ausgangsprodukte können Polysiloxane mit leicht substituierbaren Atomen oder Gruppen, z.B. mit an Silicium gebundenen Halogenatomen, und/oder silangruppenhaltige Polysiloxane als eine Komponente und monomere kohlenstofforganische Verbindungen mit leicht substituierbaren Atomen oder funktionellen Gruppen, z.B. mit akti vierten Wasserstoffatomen oder kohlenstoffgebundenen Halogenatomen, als zweite Komponente eingesetzt werden. Beispielsweise können entsprechend halogenierte Polysiloxane mit Alkoholen und Aminen oder silangruppenhaltige Polysiloxane mit Alkyl-oder Acylchloriden in an sich bekannter Weise zu geeigneten Copolymeren umgesetzt werden.

Für die siliciumorganische Komponente der erfindungsgemäß eingesetzten Copolymeren werden solche Polyorganosiloxane verwendet, die reaktive end-und/oder seitenständige OR-oder $NR_2$-Gruppen, in denen R ein Wasserstoffatom, eine Methyl-oder Ethylgruppe, eine Phenylgruppe oder eine Acylgruppe mit 1 bis 4 C-Atomen im Alkylrest bedeutet, wobei die einzelnen Gruppen R gleich oder verschieden sein können, oder Vinyl-oder Methylolgruppen oder direkt an Silicium gebundenen Wasserstoff aufweisen.

Die Organogruppen im Polyorganosiloxan sind Methyl-, Ethyl-oder Phenylgruppen oder beliebigt Kombinationen dieser Gruppen, da aus den entsprechenden Polysiloxanen gemäß der Erfindung Copolymere mit sehr guten Eigenschaften als Verarbeitungshilfsmittel und Modifiziermittel für insbesondere - schwierig zu verarbeitende Kautschukmischungen hergestellt werden können. Darüberhinaus haben diese Polysiloxane den Vorteil, als Ausgangsprodukte besonders leicht verfügbar zu sein. Bevorzugt werden als Polyorganosiloxane $\alpha,\omega$-Dihydroxypolydimethylsiloxane oder methylolgruppenhaltige Polydimethylsiloxane mit 1 bis 10 Molen Methylolgruppen verwendet, wobei diese Polydimethylsiloxane ein mittleres Molekulargewicht im Bereich von 300 bis 10000 aufweisen.

Die als Ausgangsprodukt für die Herstellung der erfindungsgemäß verwendeten Copolymere in Frage kommenden Polyorgano siloxane werden mit Hilfe an sich bekannter Methoden der Silikonchemie hergestellt, z.B. durch Hydrolyse, Polykondensation und/oder Polymerisation monomerer Organosilane, beispielsweise durch Hydrolyse von Dimethyldichlorsilan und anschließende Polykondensation des entstandenen Dihydroxydimethylsilans.

In dieser Reaktionsstufe wird vorteilhaft auch der Einbau der funktionellen Gruppen vorgenommen, mit deren Hilfe in den nachfolgenden Reaktionsstufen die Umsetzung mit einer oder mehreren monomeren kohlenstofforganischen Komponenten zu einem erfindungsgemäß zu verwendenden Organo-Silikon-Copolymeren erfolgen kann. Dieser Einbau von funktionellen Gruppen kann z.B. in einfacher Weise durch Co-Hydrolyse, Cokondensation oder Copolymerisation eines mit einer entsprechenden funktionellen Gruppe versehenen monomeren Silans mit den übrigen, die Polyorganosiloxan-Kette aufbauenden Organosilanen erfolgen. So führt z.B. die Co-Hydrolyse von Dimethyldichlorsilan mit anschließender Cokondensation zusammen mit Methyldichlorsilan in entsprechenden Molverhältnissen zu einer Polydimethylsiloxan-Kette mit einer dem Molverhältnis entsprechenden Menge an mehr oder weniger zufällig über die Siloxan-Kette verteilten $\geq$Si-H-Gruppen, die mit Hilfe einer der vorstehend beschriebenen Methoden mit kohlenstofforganischen Reaktionspartnern, die geeignete reaktionsfähige funktionelle Gruppen aufweisen, zu erfindungsgemäß verwendbaren Copolymeren umgesetzt werden können.

Die Hydrolyse und anschließende Polykondensation von monomeren Organosilanen kann unter bestimmten Arbeitsbedingungen so geführt werden, daß man Polyorganosiloxane erhält, die an beiden Kettenenden jeweils eine Hydroxylgruppe aufweisen. Dieses Verfahren ist besonders einfach und gut geeignet zur Herstellung von Polydiorganosiloxanen als bevorzugten Ausgangsprodukten für die gewünschten Silikon-Copolymeren. So ist es z.B. bekannt, Dimethyldichlorsilan mit Wasser so zu hydrolysieren, daß ein Polymerengemisch je nach den Arbeitsbedingungen mit 50-80% kettenpolymeren $\alpha,\omega$-Dihydroxydimethylsiloxanen erhalten wird, siehe Walter Noll, Chemie und Technologie der Silicone, Weinheim 1968, Seite 164. Diese Monographie enthält übrigens eine Übersicht über die Methoden zur Herstellung von Polydiorganosiloxanen und den Einbau funktioneller Gruppen, auf die hier verwiesen wird.

Das mittlere Molekulargewicht der erfindingsgemäß als Ausgangsprodukte verwendbaren funktionellen Polyorganosiloxane kann in weiten Grenzen variieren, etwa von 300 bis 75000, vorzugsweise von 500 bis 25000. Die Grenzen werden durch die abnehmende Wirksamkeit der resultierenden Organo-Silikon-Copolymeren bestimmt. Bei Molekulargewichten von unter 300 sind die Polysiloxanketten nicht lang genug, um die für sie typischen Wirkungen in der Kautschukmischung entfalten zu können. Bei Molekulargewichten von wesentlich über 75000 kann es dagegen zu Verträglichkeitsproblemen selbst bei geeigneter Wahl des kohlenstofforganischen Copolymerisationspartners kommen, da die Eigenschaften der siliciumorganischen Komponente in einem solchen Falle bestimmend für die Gesamteigenschaften des Copolymeren werden. Aus den genannten Gründen werden daher Polyorganosiloxane mit Molekulargewichten im Bereich von 1000 bis 10000 besonders bevorzugt eingesetzt.

Geeigente monomere kohlenstofforganische Reaktionspartner als zweiter Komponente für die Herstellung der erfindungsgemäß verwendbaren Organo-Silikon-Copolymeren sind dadurch charakterisiert, daß sie mindestens einen kohlenwasserstoffhaltigen Teil, der gesättigt oder ungesättigt und gerad-oder verzweigtkettig ist und mindestens 4 C-Atome enthält, und ein oder mehrere reaktionsfähige Gruppen oder Zentren aufweisen, die in der Lage sind, mit der oder den reaktiven Gruppen oder Zentren im Polyorganosiloxan-Ausgangsmaterial unter Bildung der gewünschten, erfindungsgemäß verwendbaren Organo-Silikon-Copolymeren zu reagieren. Es hat sich nämlich gezeigt, daß eine Kettenlänge von 4 C-Atomen im kohlenwasserstoffhaltigen Molekülteil der kohlenstofforganischen Reaktionskomponente einerseits erforderlich, andererseits aber auch ausreichend ist, um eine hinreichende Verträglichkeit der erfindungsgemäß einzusetzenden Organo-Silikon-Copolymeren mit Kautschukmischungen zu gewährleisten.

Im übrigen kann das monomere kohlenstofforganische Ausgangsmaterial den verschiedensten chemischen Verbindungstypen angehören, wenn nur sichergestellt ist, daß die funktionellen Gruppen in der Lage sind, mit den reaktiven Zentren der Polydiorganosiloxan-Moleküle in der gewünschten Weise zu reagieren.

Daraus folgt, daß die Anzahl und Art der als kohlenstofforganische Reaktionskomponenten in Frage kommenden geeigneten chemischen Verbindungstypen sehr groß und vielgestaltig ist. Beispielsweise lassen sich in an sich bekannter Weise chemische Verbindungstypen wie Aldehyde, ein-oder mehrwertige Alkohole, Phenole, Amine, Carbonsäuren, Carbonsäurehalogenide, Carbonsäureamide und -ester sowie Olefine und andere ungesättigte, rein organische Monomere, wie Vinyl-oder Acrylverbindungen, mit Polydiorganosiloxanen zu den gewünschten Kautschukverarbeitungshilfsmitteln copolymerisieren. Die Auswahl der genannten chemischen Verbindungstypen richtet sich nach der Art und Anzahl der gewünschten kohlenstofforganischen Gruppen und ihrer Verknüpfung mit dem Polysiloxan.

Vorzugsweise werden für den erfindungsgemäßen Zweck monomere kohlenstofforganische Verbindungen verwendet, die einen oder mehrere aliphatische Kohlenwasserstoffreste oder einen oder mehrere Aralkyl-, Alkylaryl-, Carbonsäureester-, Carbonsäuresalz-und/oder Carbonsäureamid-Reste aufweisen.

Die kohlenstofforganischen Verbindungen weisen in der Regel in ihrem kohlenwasserstoffhaltigen Teil vorzugsweise 4 bis 26 C-Atome und beim Vorliegen von Carbonsäure-, Carbonsäureester-und/oder Carbonsäureamid-Gruppen im Acylrest vorzugsweise 4 bis 22 C-Atome auf.

Dementsprechend können die erfindungsgemäß einsetzbaren Organo-Silikon-Copolymeren beispielsweise die folgenden kohlenstofforganischen Gruppen enthalten:

1)

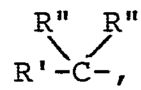

in der R′ eine gesättigte oder ungesättigte, geradkettige oder verzweigte Kohlenwasserstoffgruppe mit 3 bis 25 C-Atomen oder eine gegebenenfalls mit einer aliphatischen Kohlenwasserstoffgruppe mit 3 bis 25 C-Atomen substituierte Phenylgruppe und R″ Wasserstoff oder eine aliphatische Kohlenwasserstoffgruppe mit 1 oder 2 C-Atomen oder R′ darstellen, wobei die einzelnen Gruppen R′ bzw. R″ untereinander gleich oder verschieden sein können,

2)

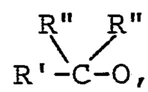

in denen R′ und R″ die unter 1) angegebenen Bedeutungen haben,

3)

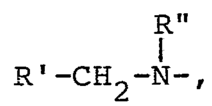

in denen R′ und R″ die unter 1) angegebenen Bedeutungen haben,

4) Carbonsäuregruppen und/oder Carbonsäureestergruppen und/oder Carbonsäureamidgruppen mit jeweils 4 bis 22 C-Atomen im Acylrest.

Vorzugsweise werde solche kohlenstofforganischen Verbindungen für die Bildung der erfindungsgemäß einzusetzenden Copolymeren verwendet, die als reaktive Gruppen oder Zentren ein oder mehrere C=C-Doppelbindungen oder -C≡C-Dreifachbindungen und/oder ein oder mehrere Epoxid-, Hydroxyl-, Carboxyl-, Amino-und/oder Isocyanatgruppen aufweisen.

Ferner haben sich zur Herstellung erfindungsgemäßer Verarbeitungsmittel und Modifiziermittel partielle Fettsäureester mehrwertiger Alkohole, Fettalkohole oder Fettsäuren sehr gut bewährt, weshalb die Verwendung dieser kohlenstofforganischen Komponenten in dem erfindungsgemäßen Verfahren ebenfalls bevorzugt wird.

Das Verhältnis zwischen den Molekulargewichten des kohlenstofforganischen und des siliciumorganischen Teils der erfindungsgemäßen Organo-Silikon-Copolymeren kann in weiten Verhältnissen dem jeweiligen Anwendungsfall angepaßt und variiert werden. Eine ausreichende Eigenschaftskombination ist allerdings in der Regel nur gewährleistet, wenn der kohlenstofforganische bzw. der siliciumorganische Anteil in dem Copolymeren einen Mindestwert nicht unterschreitet. Versuche haben gezeigt, daß der kohlenstofforganische bzw. siliciumorganische Anteil jeweils bei mindestens 5 Gew.% liegen sollte. Das gewünschte Verhältnis kann zum einen durch eine entsprechende Wahl der Molekulargewichte der beiden Reaktionspartner und zum anderen durch Einstellung einer bestimmten Anzahl an reaktiven Gruppen in den Reaktionspartnern erhalten werden. Diese Maßnahmen sind dem Fachmann geläufig und brauchen nicht weiter beschrieben zu werden. Vorzugsweise beträgt der kohlenstofforganische Anteil im Copolymeren bzw. Blockcopolymeren 10 bis 90 Gew.%.

Die erfindungsgemäß als Verarbeitungshilfsmittel oder Modifiziermittel verwendeten Copolymeren haben ein mittleres Molekulargewicht im Bereich von 500 bis 100 000, vorzugsweise von 500 bis 50000 und besonders bevorzugt von 500 bis 20000.

Die Erfindung wird anhand der folgenden Beispiele im einzelnen weiter erläutert.

A. Herstellung von erfindungsgemäßen Kautschukverarbeitungshilfsmitteln.

Beispiel 1:

25 Gewichtsteile pulverförmiges Pentaerythritdistearat (Schmelzpunkt 55°C) wurden in eine Mischung aus 100 Gewichtsteilen linearer α,ω-Dihydroxypolydimethylsiloxane mit einem mittleren Molekulargewicht von etwa 1700 und 40 Gewichtsteilen Xylol eingetragen und 0,02 Gewichtsteile eines Aluminiumchelat-Katalysators zugegeben. Die Mischung wurde unter ständigem Rühren am Rückfluß auf etwa 155°C erhitzt. Unter Aufrechterhaltung der erreichten Temperatur wurde das Xylol zusammen mit dem durch Kondensationsreaktion gebildeten Wasser abdestilliert, bis sämtliches Xylol entfernt war. Daraufhin wurde die Temperatur innerhalb von 4 Stunden auf 200°C erhöht und innerhalb von 2 Stunden ein Vakuum von etwa 20 mbar an die Reaktionsmischung angelegt; diese Bedingungen wurden etwa 30 Minuten aufrechterhalten. Danach ließ man die Reaktionsmischung abkühlen. Es wurden 120 Gewichtsteile eines weichen, elfenbeinfarbenen Cokondensationsproduktes erhalten, das bei Raumtemperatur (21°C) halbflüssig ist. Seine dynamische Viskosität betrug bei 70°C 420 mPa•s.

Das Endprodukt kann auf feinpulvrige Kieselsäure aufgezogen werden, wodurch es leicht gieß-und schüttbar wird und sich ohne Schwierigkeiten genau dosieren läßt.

Beispiel 2:

38 Gewichtsteile 12-Hydroxystearinsäure wurden in eine Mischung aus 100 Gewichtsteilen α,ω-Dihydroxypolydimethylsiloxanen wie in Beispiel 1 und 80 Gewichtsteilen Xylol eingetragen und unter den gleichen Bedingungen, wie in Beispiel 1 beschrieben, umgesetzt. Das erhaltene Reaktionsprodukt wurde auf 140°C abgekühlt, dann portionsweise eine äquivalente Menge $Ca(OH)_2$ zugesetzt und bei Aufrechterhaltung der eingestellten Temperatur die Verseifung durchgeführt.

Es wurden 140 Gewichtsteile eines festen, leicht klebrigen, plastischen hellbraunen Cokondensationsproduktes erhalten.

Beispiel 3:

42 Gewichtsteile Stearinsäure wurden mit 100 Gewichtsteilen eines Polydimethylsiloxans mit 3 Molen sowohl seitenständiger als auch endständiger $CH_2OH$-Gruppen und mit einem mittleren Molekulargewicht von etwa 2100 in Gegenwart von 0,05 Gewichtsteilen eines Zinkkatalysators bei einer Reaktionstemperatur von etwa 170°C verestert. Nach Beendigung der Umsetzung wurde noch für etwa 1 Stunde ein Vakuum von ca. 20 mbar an die Reaktionsmischung angelegt. Nach dem Abkühlen erhielt man 135 Gewichtsteile eines weißen, wachsartigen Produktes mit einer Säurezahl von 5.

Beispiel 4:

40 Gewichtsteile 2-Ethylhexansäure wurden mit 100 Gewichtsteilen eines Polydimethylsiloxans mit 5,5 Molen sowohl seiten-als auch endständiger $CH_2OH$-Gruppen und mit einem mittleren Molekulargewicht von etwa 3000 in der in Beispiel 3 beschriebenen Verfahrensweise verestert.. Nach dem Abkühlen erhielt man 135 Gewichtsteile einer wasserklaren, mittelviskosen Flüssigkeit mit einer Säurezahl von 5 und mit einer dynamischen Viskosität von 500 mPa•s bei 20°C.

Beispiel 5:

20 Gewichtsteile Polyhydrogenmethylsiloxan der Formel

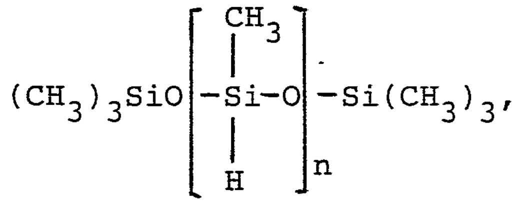

in der n einen durchschnittlichen Wert von 40 hat, wurden tropfenweise in eine Mischung aus 41 Gewichtsteilen Octen-1, 0,007 Gewichtsteilen einer 5 %igen Lösung von $H_2PtCl_6$ $6H_2O$ in Isopropanol und 60 Gewichtsteilen Toluol bei einer Temperatur von 90°C eingetragen. Anschließend wurde die erhaltene Mischung einige Stunden bei 110°C gerührt, bis das Ende der Reaktion durch das Verschwinden der $\nu_{Si-H}$-Bande im IR-Spektrum angezeigt wurde. Danach wurden die flüchtigen Anteile bei einem Druck von 30 mbar und einer Temperatur von 120°C abdestilliert. Es wurden 53 Teile (= 92 % der Theorie) eines Polyorganosiloxans der Formel

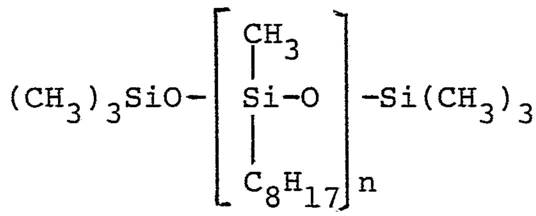

erhalten.

Beispiel 6:

94 Gewichtsteile eines Polysiloxans der Formel

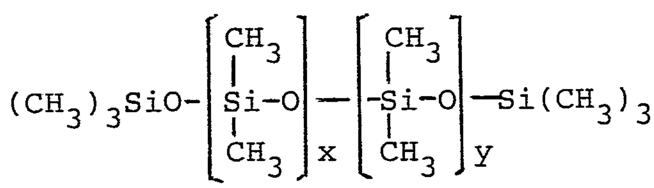

bei dem das Verhältnis x/y = 3 ist und das eine Viskosität $\eta$ von 200 mPa•s bei 25°C aufweist, wurden in eine Mischung aus 41 Gewichtsteilen Octen-1, 0,007 Gewichtsteilen einer 5%igen Lösung von $H_2PtCl_6$ $6H_2O$ in Isopropanol und 30 Gewichtsteilen Toluol bei 100°C eingetragen. Anschließend wurde die erhaltene Mischung einige Stunden unter Rückfluß erhitzt. Dann wurden die flüchtigen Anteile bei einer Temperatur von 120°C und einem Druck von 30 mbar abdestilliert. Es wurden 123 Gewichtsteile (94% der Theorie) des gebildeten Polyorganosiloxans erhalten.

B. Prüfung der Wirksamkeit von bekannten und erfindungsgemäß vorgeschlagenen Kautschukverarbeitungshilfsmitteln.

Die Wirksamkeit von Verarbeitungshilfsmitteln für Kautschukmassen wurde durch Prüfung des Fließverhaltens von Kautschukmassen, die die zu prüfenden Verarbeitungshilfsmittel enthielten, im sog. Spiraltest ermittelt. Im Spiraltest kann die Fließfähigkeit von Kautschukmassen und Thermoplasten mit und ohne Additive unter definierten Bedingungen geprüft werden, siehe Taschenbuch der Kunststoff-Additive, Herausgeber R. Gächter und H. Müller, 1979, Seite 264.

Die zu prüfende Kautschukmischung wurde mit Hilfe einer Spritzgußmaschine in eine Spiralform gepreßt, und zwar unter den folgenden Arbeitsbedingungen:
Pressendruck 25 MPa
Kolbendurchmesser 210 mm
Schließgeschwindigkeit 26 mm/sec.
Temperatur 150 - 170°C
Einspritzzeit 30 sec.

Anschließend wurde das Gewicht der in die Spiralform gepreßten Masse (die der Fließlänge der Masse in der Spiralform entspricht) gemessen. Die ermittelten Meßwerte dienten als Maß für die Fließfähigkeit und Verarbeitbarkeit der untersuchten Massen.

Versuchsreihe 1:

Die folgende Grundmischung auf der Basis eines rußhaltigen Nitrilkautschuks wurde zur Prüfung der Wirksamkeit verschiedener Verarbeitungshilfsmittel eingesetzt:

| Bestandteile | Gew.-Teile |
|---|---|
| rußhaltiger Nitrilkautschuk* | 200 |
| Zinkoxid | 5 |
| Stearinsäure | 1 |
| Dioctylphthalat | 10 |
| Dimorpholinodisulfid** | 1,5 |
| Tetramethylthiuramdisulfid (= TMTD, als Beschleuniger) | 1,7 |
| Verarbeitungshilfsmittel | 2 |

*) 50% Butadien-Acrylnitril-Kautschuk (mit 33% ACN) und 50% Ruß

**) geöltes Produkt

Die Ergebnisse der Spiraltests unter Verwendung verschiedener bekannter und erfindungsgemäßer Verarbeitungshilfsmittel sind nachfolgend zusammengestellt:

| Verarbeitungshilfsmittel | Gewicht der Masse in der Spiralform (g) |
|---|---|
| ohne (Blindversuch) | 4,8 |
| Gemisch von Fettsäuren und Fettsäureestern* | 5,2 |
| Calciumseifen von natürl. Fettsäuren | 5,4 |
| aus Beispiel 1 | 5,9 |
| aus Beispiel 2 | 5,9 |
| aus Beispiel 3 | 5,8 |
| aus Beispiel 4 | 5,7 |

*) bekanntes Verarbeitungshilfsmittel der Fa. Rhein-Chemie

Versuchsreihe 2:

Verschiedene Verarbeitungshilfsmittel wurden in der folgenden Grundmischung auf der Basis eines Fluorelastomeren geprüft:

| Bestandteile | Gew.-Teile |
|---|---|
| Fluorelastomere** | 100 |
| Magnesiumoxid | 3 |
| Ruß | 20 |
| Calciumhydroxid | 6 |
| Verarbeitungshilfsmittel | 2 |

**) ein Handelsprodukt der Firma Du Pont

Die Ergebnisse der Spiraltests unter Verwendung verschiedener bekannter und erfindungsgemäßer Verarbeitungshilfsmittel sind nachfolgend zusammengestellt:

| Verarbeitungshilfsmittel | Gewicht der Masse in der Spiralform (g) |
|---|---|
| ohne (Blindversuch) | 7,4 |
| Carnaubawachs | 7,7 |
| Glycerintristearat | 7,6 |
| bekanntes Produkt*** | 8,2 |
| aus Beispiel 1 | 9,2 |
| aus Beispiel 2 | 8,6 |
| aus Beispiel 3 | 8,9 |
| aus Beispiel 4 | 9,3 |

***) Handelsprodukt der Fa. Vanderbilt, bestehend aus etwa gleichen Teilen Dioctylphthalat, freien Fettsäuren, Zinkstearat und Hochdruckpolyethylen

Versuchsreihe 3:

Verschiedene Verarbeitungshilfsmittel wurden in der folgenden Grundmischung auf der Basis eines Styrol-Butadien-Kautschuks geprüft:

| Bestandteile | Gew.-Teile |
|---|---|
| Styrol-Butadien-Kautschuk | 1075 |
| Zinkoxid | 25 |
| N-Cyclohexyl-2-benzothiazylsulfenamid | 5 |
| Tetramethylthiuramdisulfid | 2,5 |
| Stearinsäure | 5 |
| Schwefel | 11 |
| Verarbeitungshilsmittel | 2 |

Die Ergebnisse der Spiraltests unter Verwendung verschiedener bekannter und erfindungsgemäßer Verarbeitungshilfsmittel sind nachfolgend zusammengestellt:

| Verarbeitungshilfsmittel | Gewicht der Masse in der Spiralform (g) |
|---|---|
| ohne (Blindversuch) | 3,8 |
| Calciumstearat | 4,1 |
| aus Beispiel 1 | 4,3 |
| aus Beispiel 2 | 4,6 |
| aus Beispiel 3 | 4,3 |
| aus Beispiel 4 | 4,4 |

Versuchsreihe 4:

Unter Verwendung der in der Versuchsreihe 1 angegebenen Grundmischung wurde die Wirksamkeit der in Versuchsreihe 1 eingesetzten bekannten Verarbeitungshilfsmittel bei steigenden Einsatzmengen untersucht. Die Ergebnisse sind nachfolgend zusammengestellt:

| Verarbeitungs-hilfsmittel | Einsatz-menge (Gew.-Teile) | Massegewicht (g) i.d. Spirale |
|---|---|---|
| Gemisch von Fettsäuren und Fettsäureestern, Produkt d. Fa. Rhein-Chemie | 2,0 | 5,2 |
| " " | 4,0 | 5,5 |
| " " | 6,0 | 5,7 |
| Calciumseifen natürlicher Fettsäuren | 2,0 | 5,4 |
| " " | 4,0 | 5,8 |
| " " | 6,0 | 5,9 |

Aus der Zusammenstellung geht hervor, daß die bekannten Verarbeitungshilfsmittel erst bei deutlich höherer Dosierung die Gleitmittelwirkung und die Wirkung auf die Verarbeitbarkeitseigenschaften der untersuchten Grundmischung erreichte, die mit den erfindungsgemäß eingesetzten Verarbeitungshilfsmittel bereits bei einer Einsatzmenge von nur 2,0 Gew.-Teilen erreicht werden. Hinzu kommt, daß die höheren Einsatzmengen bei den bekannten Verarbeitungshilfsmitteln negative Einflüsse auf das Vulkanisat haben, wie schmierige Oberflächen und Verschlechterung der mechanischen Eigenschaften. Beispielsweise wurde der Elastizitätsmodul der Vulkanisate bei Verwendung von 6 Gew.-Teilen Verarbeitungshilfsmittel durch den sich dadurch ergebenden Verdünnungseffekt um etwa 20% reduziert. Bei Verwendung der erfindungsgemäßen Verarbeitungshilfsmittel sind höhere Dosierungen zur Steigerung der Gleitmittelwirkung und zur Verbesserung der Verarbeitbarkeit nicht erforderlich. Die vorstehend genannten Nachteile wurden bei ihnen nicht beobachtet.

Versuchsreihe 5:

In dieser Versuchsreihe wird gezeigt, daß die erfindungsgemäßen Organo-Silikon-Copolymeren auch vorteilhaft bei der Verarbeitung von Thermoplasten eingesetzt werden können. Ausgehend von der nachstehend angegebenen Grundmischung auf der Basis von PVC wurden unter Einmischung verschiedener Verarbeitungshilfsmittel sog. Gelierversuche in einem Mischwerk mit meßbarem Drehmoment (Rheocord) bei einer Meßtemperatur von 180°C und einer Drehzahl von 64 $min^{-1}$ durchgeführt.

| Bestandteile | Gew.-Teile |
|---|---|
| PVC | 100 |
| epoxidiertes Sojaöl | 2 |
| PVC-Stabilisator (17) | 1,5 |
| Verarbeitungshilfsmittel | 2,2 |

Die Ergebnisse sind nachfolgend zusammengestellt:

| Verarbeitungshilfsmittel | Drehmoment |
|---|---|
| ohne (Blindversuch) | 3,10 |
| bekanntes Produkt d. Fa. Henkel* | 2,85 |
| aus Beispiel 1 | 2,60 |
| aus Beispiel 2 | 2,50 |
| aus Beispiel 3 | 2,60 |
| aus Beispiel 4 | 2,55 |

*) farblose ölige neutrale Flüssigkeit, Viskosität (20°C) ca. 28 cP

Aus der vorstehenden Zusammenstellung geht hervor, daß die erfindungsgemäß eingesetzten Organo-Silikon-Copolymeren in einem Thermoplasten wie PVC eine im Vergleich zu einem bekannten Gleitmittel deutlich stärkere Wirkung zeigen.

Versuchsreihe 6:

Die nach den Beispielen 5 und 6 hergestellten erfindungsgemäßen Verarbeitungshilfsmittel wurden in der folgenden Grundmischung auf der Basis eines Nitrilkautschuks geprüft:

| Bestandteile | Gew.-Teile |
|---|---|
| Nitrilkautschuk (34% Acrylnitril) | 100 |
| Ruß | 60 |
| Zinkoxid | 5 |
| Dioctylphthalat | 5 |
| Stearinsäure | 1 |
| Tetramethylthiuramdisulfid | 1,7 |
| 4,4'-Dithiomorpholin | 1,5 |
| Verarbeitungshilfsmittel | 5 |

Entsprechende vulkanisierbare Gemische wurden in einem Innenmischer hergestellt und anschließend auf einer Walze zu einem Walzfell verarbeitet. Dann wurde das Gemisch in einer Vulkanisationspresse bei einer Temperatur von 160°C 15 Minuten lang zu einer 6 mm dicken Platte vulkanisiert.

An der so erhaltenen Probe wurden in Anlehnung an DIN 53 375 (Fassung vom 28.2.1983) die Gleitreibungskoeffizienten ermittelt.

Die Ergebnisse sind nachfolgend zusammengestellt:

| Verarbeitungshilfsmittel | Gleitreibungs-koeffizient |
|---|---|
| ohne (Blindversuch) | 0,28 |
| aus Beispiel 5 | 0,08 |
| aus Beispiel 6 | 0,07 |

Die Ergebnisse zeigen die erhebliche Wirkung der erfindungsgemäßen Organo-Silikon-Copolymeren auf den Gleitreibungskoeffizienten des Nitrilkautschuks.

**Ansprüche**

1. Verfahren zur Herstellung von Kautschuk-oder Thermoplastmischungen unter Verwendung von Verarbeitungshilfsmitteln oder Modifiziermitteln auf der Basis von Organo-Silikon-Copolymeren aus Polyorganosiloxanen, die eine Anzahl endständiger und/oder seitenständiger reaktiver Substituenten aufweisen und in denen die Organogruppe eine Methyl-, Ethyl-und/oder Phenylgruppe ist, und kohlenstofforganischen Verbindungen mit ein oder mehreren reaktionsfähigen Gruppen oder Zentren, über die die kohlenstofforganischen Verbindungen mit den Polyorganosiloxanen zu Organo-Silikon-Copolymeren verknüpft sind, dadurch gekennzeichnet, daß die Organo-Silikon-Copolymeren durch chemische Umsetzung von Polyorganosiloxanen, die end-und/oder seitenständige OR-oder $NR_2$-Gruppen, in denen R ein Wasserstoffatom, eine Methyl-oder Ethylgruppe, eine Phenylgruppe oder eine Acylgruppe mit 1 bis 4 C-Atomen im Alkylrest bedeutet und wobei die einzelnen Gruppen R gleich oder verschieden sein können, oder Vinyl-oder Methylolgruppen oder direkt an Silicium gebundenen Wasserstoff aufweisen und ein mittleres Molekulargewicht von 300 bis 75000 haben, mit monomeren kohlenstofforganischen Verbindungen, deren kohlenwasserstoffhaltiger Teil gesättigt oder ungesättigt und gerad-oder verzweigtkettig ist und mindestens 4 C-Atome enthält und die als reaktive Gruppen oder Zentren ein oder mehrere C=C-Doppelbindungen oder C≡C-Dreifachbindungen und/oder ein oder mehrere Epoxid-, Hydroxyl-, Carboxyl-, Amino-und/oder

Isocyanatgruppen aufweisen, erhalten werden, wobei der kohlenstofforganische bzw. siliciumorganische Anteil im Organo-Silikon-Copolymeren mindestens 5 Gew.% beträgt und das mittlere Molekulargewicht der erhaltenen Copolymeren im Bereich von 500 bis 100.000 liegt.

2. Verfahren nach Anspruch 1, dadurch gekennzeichnet, daß als Polyorganosiloxan ein α,ω-Dihydroxy-polydimethylsiloxan mit einem mittleren Molekulargewicht im Bereich von 300 bis 10000 eingesetzt wird.

3. Verfahren nach Anspruch 1, dadurch gekennzeichnet, daß als Polyorganosiloxan ein methylolgruppenhaltiges Polydimethylsiloxan mit 1 bis 10 Molen Methylolgruppen und mit einem mittleren Molekulargewicht im Bereich von 300 bis 10000 eingesetzt wird.

4. Verfahren nach einem der Ansprüche 1 bis 3, dadurch gekennzeichnet, daß kohlenstofforganische Verbindungen eingesetzt werden, die einen oder mehrere aliphatische Kohlenwasserstoffreste oder einen oder mehrere Aralkyl-oder Alkylarylreste oder Carbonsäureester-, Carbonsäuresalz-und/oder Carbonsäureamid-Reste aufweisen.

5. Verfahren nach einem der Ansprüche 1 bis 4, dadurch gekennzeichnet, daß als kohlenstofforganische Verbindungen partielle Fettsäureester mehrwertiger Alkohole, Fettalkohole oder Fettsäuren eingesetzt werden.

6. Verfahren nach einem der Ansprüche 1 bis 5, dadurch gekennzeichnet, daß kohlenstofforganische Verbindungen eingesetzt werden, deren kohlenwasserstoffhaltiger Rest 4 bis 26 C-Atome aufweist.

7. Verfahren nach einem der Ansprüche 1 bis 5, dadurch gekennzeichnet, daß kohlenstofforganische Verbindungen eingesetzt werden, die Carbonsäure-, Carbonsäureester-und/oder Carbonsäureamid-Gruppen mit 4 bis 22 C-Atomen im Acylrest aufweisen.

8. Verfahren nach einem der vorangegangenen Ansprüche, dadurch gekennzeichnet, daß der kohlenstofforganische Anteil im Organo-Silikon-Copolymeren 10 bis 90 Gew.% beträgt.

Europäisches Patentamt

# EUROPÄISCHER RECHERCHENBERICHT

Nummer der Anmeldung

EP 86 10 5790

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 332 900 (A. REISCHL) * Ansprüche 1,2,5; Spalte 2, Zeilen 31-71 * | 1,3 | C 08 G 77/38<br>C 08 L 57/00<br>C 08 L 101/00 //<br>(C 08 L 57/00<br>C 08 L 83:04)<br>(C 08 L 101/00<br>C 08 L 83:04) |
| X | EP-A-0 045 641 (TORAY) * Anspruch 1; Seite 6, Absatz 3; Seite 7, Absatz 1; Seite 9 * | 1 | |
| X | GB-A-2 019 413 (TORAY) * Ansprüche 1-3; Seite 1, Zeilen 37-45; Seite 2, Zeilen 22-39 * | 1 | |
| A | EP-A-0 114 348 (DOW CORNING) * Anspruch 1; Seite 6, Zeilen 21-33 * | 1 | **RECHERCHIERTE SACHGEBIETE (Int. Cl.4)** |
| A | US-A-3 450 736 (F.G. DE MONTEREY) * Anspruch 1 * | 1 | C 08 G<br>C 08 L<br>C 08 K |

Der vorliegende Recherchenbericht wurde für alle Patentansprüche erstellt.

| Recherchenort | Abschlußdatum der Recherche | Prüfer |
|---|---|---|
| DEN HAAG | 24-11-1986 | DEPIJPER R.D.C. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82

DR. KARL-HEINZ SCHULMEYER
PATENTANWALT

ZUGELASSEN BEIM EUROPÄISCHEN PATENTAMT
EUROPEAN PATENT ATTORNEY
MANDATAIRE EN BREVETS EUROPÉENS

BAD ORIGINAL

D-2087 HASLOH BEI HAMBURG
KIELER STRASSE 59 a
TELEFON (0 41 06) 6 64 93
TELEX 21 64 213 watc d

Europäisches Patentamt
Erhardtstraße 27

D - 8000 München 2

EPA-EPO-OEB
DG 1
Reçu le
13 05 1986

2. Mai 1986
1050/SY

Aktenzeichen: 86105790.9
Anmelder: Schill & Seilacher (GmbH & Co.)

Bei der Durchsicht der eingereichten Anmeldungsunterlagen wurde ein offensichtlicher Schreibfehler in der Formel auf Seite 18, Zeile 5 bemerkt. In der zweiten Silikoneinheit dieser Formel muß eine Methylgruppe durch ein Wasserstoffatom ersetzt werden, das direkt mit dem Siliciumatom verbunden ist. Es wird gebeten, amtseitig die fehlerhafte Seite 18 durch die beigefügte korrigierte Seite 18 zu ersetzen.

Der Patentanwalt

Anlage
korrigierte Seite 18 (3-fach)